# FASCICULE DE BREVET EUROPEEN

(11) **EP 4 015 878 B1**
(45) Date de publication et mention de la délivrance du brevet: **15.10.2025**
(21) Numéro de dépôt: 21215855.4
(22) Date de dépôt: 20.12.2021
(51) Int. Cl.: F16H 57/04

(54) **BOÎTE DE VITESSES COMPORTANT UNE GOULOTTE DE LUBRIFICATION RETENUE SUR UN AXE DE FOURCHETTE**
GETRIEBE MIT EINEM ÖLVERTEILER, DIE AUF EINER GABELACHSE GEHALTEN WIRD
GEARBOX COMPRISING AN OIL DISTRIBUTOR HELD ON A FORK AXIS

(30) Priorité: 21.12.2020 FR 2013790
(43) Date de publication de la demande: 22.06.2022
(73) Titulaire: NEW H POWERTRAIN HOLDING, S.L.U., 47008 Valladolid (ES)
(72) Inventeur: MIRGALET, Laurent, 78084 Guyancourt (FR); VINCENT, Franck, 78084 Guyancourt (FR)
(74) Mandataire: Renault Group

(56) Documents cités:
- EP-A2- 0 785 378
- WO-A1-02/086354
- WO-A1-2020/182344
- US-A1- 2006 278 475

## Description

### Domaine technique de l'invention

La présente invention concerne une boîte de vitesses de véhicule automobile comportant une goulotte de lubrification d'une ligne d'engrenages d'une boîte de vitesses.

### Arrière-plan technique

L'invention se rapporte aux boîtes de vitesses à engrenages et à arbres parallèles. Elle concerne la lubrification des engrenages de boîte de vitesses, à partir de l'huile retenue au fond de son carter.

Plus précisément, l'invention a pour objet une boîte de vitesses de véhicule automobile comportant une goulotte de lubrification d'une ligne d'engrenages en rotation dans un carter étanche d'une boîte de vitesses et/ou de son différentiel associé, dont le corps présente une zone de captation recevant l'huile projetée vers le haut de la boîte de vitesses par des pignons ou couronnes dentées, et une zone d'écoulement et de déversement de l'huile en des points de lubrification ciblés le long de la ligne d'engrenages.

De telles goulottes de lubrification par distribution d'huile dans une boîte de vitesses, sont illustrées notamment par les documents FR-A1-3082264 et FR-A1-3089588 au contenu desquels on peut se reporter.

La personne du métier est également familière de goulottes telles que divulguées dans le document EP 0 785 378 A2 mais dont l'assemblage est plus complexe que la présente invention.

De manière connue, la goulotte de lubrification est généralement réalisée en une seule pièce en matière plastique et, pour son positionnement et son maintien en position fonctionnelle dans le carter, la goulotte de lubrification comporte le plus souvent plusieurs supports de retenue de la goulotte de lubrification dans le carter.

Par exemple, chaque support de retenue est réalisé sous la forme d'un ou plusieurs doigts parallèles qui s'étendent axialement selon une direction orthogonale à un plan de joint d'assemblage de deux parties complémentaires du carter et dont chacun est reçu dans un trou du carter.

Le procédé d'assemblage des différents composants comporte notamment une étape de mise en place, par exemple dans une première partie du carter, des lignes d'engrenages, d'axes de fourchettes de commande de changement de rapports et de la goulotte de lubrification dont le corps s'étend longitudinalement globalement parallèlement aux lignes d'engrenages et aux axes de fourchettes.

Lors de cette opération de mise en place, au moins un des doigts de retenue de la goulotte de lubrification est introduit dans un trou complémentaire de la partie de carter.

L'assemblage se termine par la « fermeture » du carter par assemblage selon la direction axiale de ses deux parties complémentaires.

L'architecture interne des boîtes de vitesses est de plus en plus contrainte et, s'agissant de l'agencement et de l'assemblage de la goulotte de lubrification, il arrive que la contrainte d'architecture de conception soit telle que l'intégrité de la goulotte de lubrification soit mise en danger lors de la fermeture du carter de la boîte de vitesses.

L'invention vise à proposer une solution pour le positionnement et le maintien de la goulotte de lubrification avant la fermeture du carter de la boîte de vitesses pour garantir qu'aucun risque de dégradation de la goulotte de lubrification ne puisse survenir lors du montage.

### Résumé de l'invention

L'invention propose une boîte de vitesses de véhicule automobile comportant une goulotte de lubrification conformément à la revendication 1.

Selon d'autres caractéristiques de l'invention :
- la goulotte de lubrification comporte un corps qui s'étend selon une direction axiale, et l'anneau de retenue s'étend dans un plan orthogonal à la direction axiale du corps ;
- l'anneau de retenue s'étend verticalement vers le haut par rapport au corps ;
- l'anneau de retenue est agencé à une extrémité axiale du corps ;
- le corps de la goulotte de lubrification comporte une zone de captation de l'huile et une zone d'écoulement et de déversement distribuant de l'huile par gravité en des points de lubrification ciblés le long de la ligne d'engrenages ;
- la goulotte de lubrification comporte au moins un autre support de retenue dans le carter qui est un doigt apte à être reçu axialement dans un trou complémentaire du carter ;
- l'autre support de retenue est agencé à l'autre extrémité axiale du corps ;
- la goulotte de lubrification est réalisée en une seule pièce par moulage.

Le carter comporte au moins deux parties assemblées selon un plan de joint orthogonal à l'axe de fourchette.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective qui illustre un exemple de réalisation d'une goulotte de lubrification selon l'invention en association avec une ligne d'engrenages et un tronçon d'un axe de fourchette ;
[Fig.2] - la figure 2 est une vue en coupe par un plan vertical qui illustre la goulotte de lubrification de la figure 1 en position montée dans un carter de boîte de vitesses ;
[Fig.3] - la figure 3 est une vue de détail en perspective qui illustre le montage de l'anneau de retenue de la goulotte de lubrification de la figure 1 sur le tronçon d'extrémité axiale avant de l'axe de fourchette ;
[Fig.4] - la figure 4 est une vue de détail en coupe et en perspective selon un autre angle qui illustre le montage de l'anneau de retenue de la goulotte de lubrification de la figure 1 sur le tronçon d'extrémité axiale avant de l'axe de fourchette ;

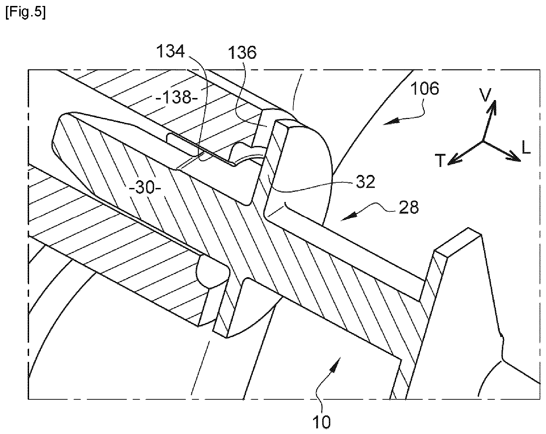

[Fig.5] - la figure 5 est une vue de détail en perspective et en coupe qui illustre le montage du doigt arrière de positionnement de la goulotte de lubrification de la figure 1.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal.

Par convention, l'axe longitudinal L est orienté de l'arrière vers l'avant.

Dans la description qui va suivre, des éléments identiques, similaires ou analogues seront désignés par les mêmes chiffres de référence.

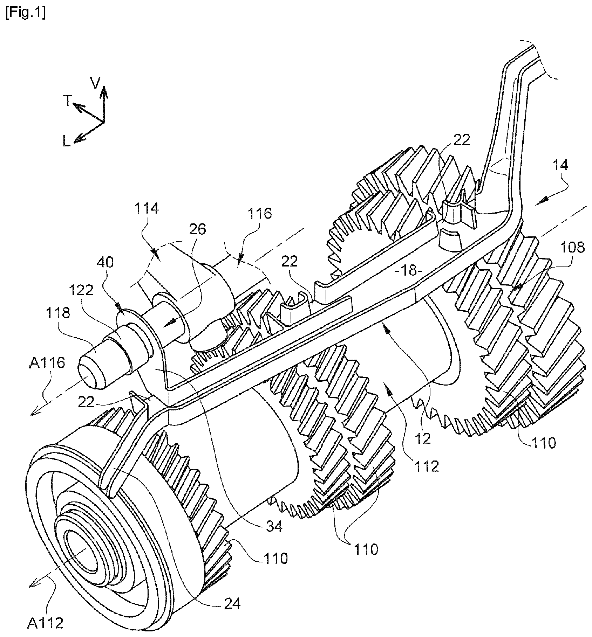

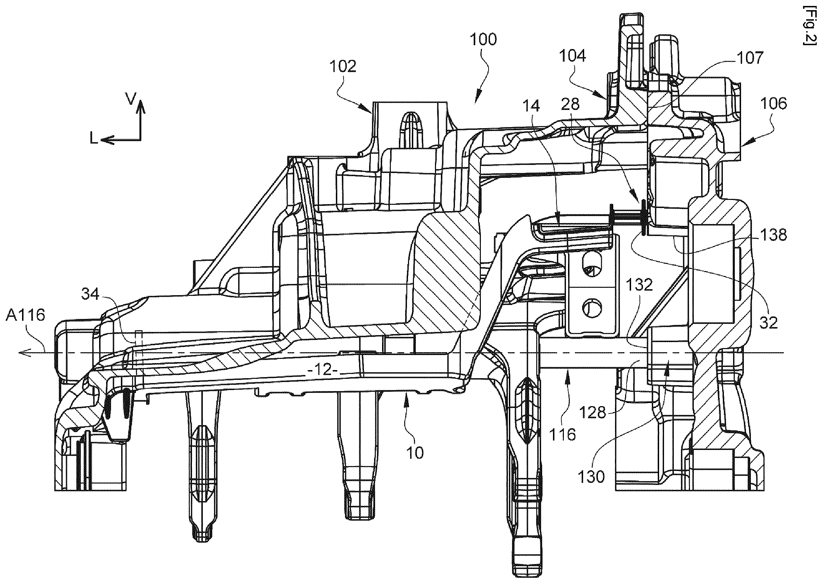

On a représenté partiellement aux figures 1 et 2 une boîte de vitesses 100 comportant un carter 102 en deux parties avant 104 et arrière 106 qui sont assemblées et fixées selon un plan de joint 107 qui est orthogonal à l'axe géométrique des composants principaux logés dans le carter 102.

Parmi ces composants, on a représenté à titre non limitatif une ligne 108 d'engrenages 110 portés par un arbre 112 qui est monté à rotation dans le carter 102, par ses deux extrémités axiales opposées, autour d'un axe A112.

On a aussi représenté une fourchette 114 qui est lié en rotation et en déplacement axial avec son axe de fourchette 116 dont l'axe A116 est parallèle à l'axe A112 de l'arbre 112.

De manière connue, l'axe de fourchette 116 est un arbre cylindrique dont chacun des tronçons d'extrémité libre avant 118 et arrière 128 est monté à rotation dans un logement complémentaire réalisé dans la partie de carter associée.

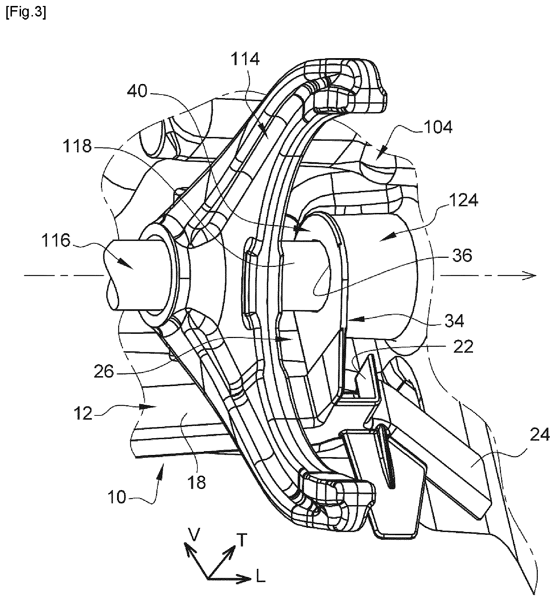

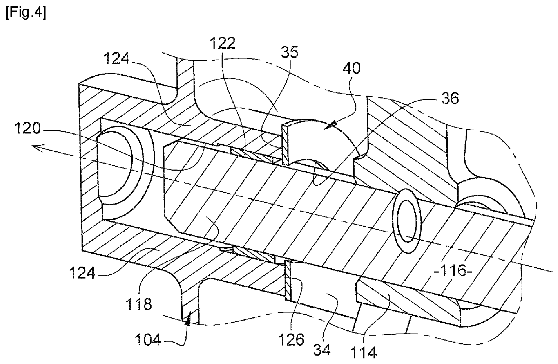

Comme on peut le voir notamment aux figures 3 et 4, le tronçon d'extrémité libre avant 118 de l'axe de fourchette 116 est reçu dans un alésage complémentaire 120 de la partie avant 104 du carter 102, ici avec interposition radiale d'une bague de glissement 122.

L'alésage 120 est réalisé dans une portion de carter 124 qui est délimitée axialement vers l'arrière par une face transversale annulaire 126.

De la même manière, le tronçon d'extrémité axiale arrière 128 est reçu dans un alésage complémentaire formé dans une potion de carter 130 de la partie arrière 104 du carter qui est délimitée par une face transversale annulaire 132.

Le carter 102 loge aussi au moins une goulotte de lubrification 10 selon l'invention.

De manière connue, la goulotte de lubrification 10 est une pièce réalisée en une seule pièce, de préférence en matière plastique, qui se présente sous la forme d'un corps principal 12 en forme de gouttière qui s'étend longitudinalement à l'intérieur du carter 102 selon une direction générale parallèle aux axes A112 de l'arbre 112 et A116 de l'axe de fourchette 116. La goulotte de lubrification 10 comporte une rampe d'alimentation 14 qui est destinée à capter du lubrifiant - notamment de l'huile - projeté par les pignons et couronnes dentées sur les parois du carter 100.

La goulotte de lubrification 10 comporte un couloir longitudinal 18 de distribution ou répartition du lubrifiant, et plusieurs canaux de déversement du lubrifiant en direction des zones à lubrifier, et notamment en direction des pignons et roues dentées.

La rampe d'alimentation 14 est agencée verticalement de préférence au-dessus du couloir principal 18 de manière que le lubrifiant collecté dans la rampe d'alimentation 14 circule par gravité en direction du couloir principal.

Trois canaux de distribution 22 sont répartis le long du couloir de distribution 18 et un autre canal de distribution 24 est agencé à l'extrémité libre avant du couloir de distribution 18 permettant la lubrification d'un pignon axialement adjacent à la paroi verticale en vis-à-vis de partie avant 104 du carter.

De manière connue, pour son positionnement à l'intérieur du carter 100 et pour la retenir dans sa position fonctionnelle de distribution ciblée du lubrifiant, la goulotte de lubrification 10 au moins deux supports de fixation.

Dans le mode réalisation illustré aux figures, la goulotte de lubrification 10 comporte un support avant de retenue 26 qui est réalisé selon les enseignements de l'invention, et un autre support arrière de retenue 28 de conception générale connue.

A titre non limitatif, chacun des deux supports de retenue avant 26 et arrière 28 est ici agencé sensiblement à l'extrémité axiale opposée associée de la goulotte de lubrification 10.

Ainsi, le support avant de retenue 26 est agencé à proximité du canal de distribution 24 de la goulotte de lubrification 10, tandis que le support arrière de retenue 28 est adjacent à la rampe d'alimentation 14.

Le support arrière de retenue 28 comporte ici un doigt de retenue 30 qui s'étend axialement vers l'arrière selon une direction orthogonale au plan de joint 107 d'assemblage de deux parties complémentaires 104 et 106 du carter 102.

Le doigt axial de retenue 30 est reçu axialement avec jeu dans un trou complémentaire 134 de la partie arrière 106 du carter 102.

A sa partie arrière, le doigt de retenue 30 comporte une collerette radiale 32 qui s'étend en regard d'une face annulaire transversale 136 d'une portion 138 de carter dans laquelle est formé le trou 134.

Le support avant de retenue 26 se présente sous la forme d'une patte de retenue 34 qui est ici une plaque s'étendant verticalement vers le haut, à partir du couloir de lubrification 18, dans un plan orthogonal à la direction longitudinale axiale générale de la goulotte de lubrification 10.

En position montée de la goulotte de lubrification 10 dans le carter 102, la plaque s'étend verticalement vers le haut dans un plan orthogonal aux axes A112 de l'arbre 112 et A116 de l'axe de fourchette 116, et donc sensiblement parallèle au plan de joint 107.

A sa partie supérieure, la patte de retenue 34 est percée centralement par un trou circulaire 36 de manière à former un anneau de retenue 40.

Le diamètre interne du trou 36 de l'anneau de retenue 40 est légèrement supérieur au diamètre externe du tronçon d'extrémité axiale avant 118 de l'axe de fourchette 116.

Ceci permet d'introduire axialement le tronçon d'extrémité axiale avant 118 de l'axe de fourchette 116 à travers le trou central 36 de l'anneau de retenue et permet un agencement selon l'invention tel qu'il est notamment représenté en détail aux figures 3 et 4.

L'anneau de retenue 40 constitue un anneau de suspension de la goulotte de lubrification 10 sur le tronçon d'extrémité axiale avant 118 de l'axe de fourchette 116, et - en coopération avec le support arrière 28 de retenue, un positionnement axial de la goulotte de lubrification 10 à l'intérieur du carter 102.

A cet effet, la face transversale avant 35 de la patte de retenue 34 s'étend avec un léger jeu axial en regard de la face transversale annulaire 126 de la portion de carter 124.

La mise en place et le montage de la goulotte de lubrification 10 peut être effectué de la manière suivante.

L'anneau de retenue 40 de la goulotte de lubrification 10 est d'abord mis en place sur le tronçon d'extrémité axiale avant 118 de l'axe de fourchette 116, puis on met en place les différentes lignes d'engrenages et fourchettes, dont l'axe 116 de la fourchette 114, dans leurs logements respectifs de la partie avant 104 du carter 102.

Grâce à l'anneau de retenue 40, la goulotte de lubrification est ainsi convenablement positionnée et maintenue et l'assemblage peut être poursuivi en venant fermer le carter au moyen de sa partie arrière 106.

Au cours de cette fermeture axiale, le doigt 30 de retenue est agencé sensiblement en face du trou complémentaire 134 de la partie arrière 106 du carter 102 et il va pénétrer dans ce trou sans risque d'endommager la goulotte de lubrification 10.

La solution technique proposée pour faciliter le au montage, consiste ainsi à venir dans un premier temps centrer l'extrémité avant du corps de la goulotte de lubrification sur un axe de fourchette. Ce centrage au plus près de l'extrémité avant de la goulotte de lubrification assure ainsi sa cohésion avec les autres composants internes de la boîte de vitesses et permet de supprimer les risques lors du montage.

Il s'agit d'une solution simple au moyen d'un support spécifique de retenue qui est réalisé directement venu de moulage lors de la goulotte de lubrification, sans pièce additionnelle, et donc sans coût supplémentaire.

## Revendications

1. Boîte de vitesses de véhicule automobile, comportant :
- un carter (102, 104, 106) ;
- au moins une ligne (108) d'engrenages qui est montée à rotation dans le carter (102, 104, 106) ;
- au moins une fourchette (114) de commande liée en translation axiale à un axe de fourchette (116) agencé dans le carter (102, 104, 106).et parallèle à la ligne (108) d'engrenages ;
- et une goulotte de lubrification (10) de la ligne (108) d'engrenages, comportant au moins un support de retenue (26) de la goulotte de lubrification (10) dans le carter (102, 104, 106), **caractérisée en ce que** le support de retenue (26) comporte un anneau (40) de retenue qui est traversé axialement par un tronçon (118) de l'axe (116) de la fourchette (114) de la boîte de vitesses (100).

2. Boîte de vitesses selon la revendication 1, **caractérisée en ce que** la goulotte comporte un corps (12) qui s'étend selon une direction axiale, et **en ce que** l'anneau (40) de retenue s'étend dans un plan orthogonal à la direction axiale du corps (12).

3. Boîte de vitesses selon la revendication 2, **caractérisé en ce que** l'anneau (40) de retenue s'étend verticalement vers le haut par rapport au corps (12).

4. Boîte de vitesses selon la revendication 2, **caractérisée en ce que** l'anneau (40) de retenue est agencé à une extrémité axiale du corps (12).

5. Boîte de vitesses selon l'une des revendications 2 à 4, **caractérisée en ce que** le corps (12) comporte une zone de captation (14) de l'huile et une zone (18) d'écoulement et de déversement distribuant de l'huile par gravité en des points de lubrification ciblés le long de la ligne (108) d'engrenages.

6. Boîte de vitesses selon l'une quelconque des revendications précédentes, **caractérisée en ce que** la goulotte comporte au moins un autre support (28) de retenue dans le carter (102, 104, 106) qui comporte un doigt de retenue (30) apte à être reçu axialement dans un trou complémentaire (130) du carter (102, 104, 106).

7. Boîte de vitesses selon la revendication 6 prise en combinaison avec la revendication 4, **caractérisée en ce que** l'autre support de retenue (28) est agencé à l'autre extrémité axiale du corps (12).

8. Boîte de vitesses selon l'une quelconque des revendications précédentes, **caractérisée en ce que** la goulotte est réalisée en une seule pièce par moulage.

9. Boîte de vitesses selon la revendication 1, **caractérisée en ce que** le carter (102) comporte au moins deux parties (104, 106) assemblées selon un plan de joint orthogonal à l'axe de fourchette.

10. Boîte de vitesses selon l'une quelconque des revendications précédentes, **caractérisée en ce que** la goulotte comporte au moins un autre support (28) de retenue dans le carter (102, 104, 106), et **en ce que** l'anneau (40) de retenue constitue un anneau de suspension de la goulotte de lubrification (10) sur un tronçon d'extrémité axiale (118) de l'axe de fourchette (116) et, en coopération avec ledit autre support (28) de retenue, un positionnement axial de la goulotte de lubrification (10) à l'intérieur du carter (102).

## Patentansprüche

1. Kraftfahrzeuggetriebe, umfassend:
- ein Gehäuse (102, 104, 106);
- mindestens einen Getriebestrang (108), der drehbar im Gehäuse (102, 104, 106) eingebaut ist;
- mindestens eine Steuergabel (114), die axial verschiebbar mit einer im Gehäuse (102, 104, 106) angeordneten Gabelachse (116) verbunden ist und parallel zum Getriebestrang (108) verläuft;
- und eine Schmierrinne (10) des Getriebestrangs (108), umfassend mindestens eine Halterung (26) der Schmierrinne (10) im Gehäuse (102, 104, 106), **dadurch gekennzeichnet, dass** die Halterung (26) einen Haltering (40) umfasst, durch den ein Abschnitt (118) der Achse (116) der Gabel (114) des Getriebes (100) axial hindurchgeht.

2. Getriebe nach Anspruch 1, **dadurch gekennzeichnet, dass** die Rinne einen Körper (12) umfasst, der sich in einer axialen Richtung erstreckt, und dass sich der Haltering (40) in einer Ebene erstreckt, die orthogonal zur axialen Richtung des Körpers (12) ist.

3. Getriebe nach Anspruch 2, **dadurch gekennzeichnet, dass** der Haltering (40) sich relativ zum Körper (12) vertikal nach oben erstreckt.

4. Getriebe nach Anspruch 2, **dadurch gekennzeichnet, dass** der Haltering (40) an einem axialen Ende des Körpers (12) angeordnet ist.

5. Getriebe nach einem der Ansprüche 2 bis 4,
**dadurch gekennzeichnet, dass** der Körper (12) einen Ölauffangbereich (14) und einen Strömungs- und Ablassbereich (18) umfasst, der das Öl durch die Schwerkraft an gezielte Schmierpunkte entlang des Getriebestrangs (108) verteilt.

6. Getriebe nach einem der vorstehenden Ansprüche,
**dadurch gekennzeichnet, dass** die Rinne mindestens eine weitere Halterung (28) im Gehäuse (102, 104, 106) umfasst, die einen Haltefinger (30) umfasst, der dazu geeignet ist, axial in einem komplementären Loch (130) des Gehäuses (102, 104, 106) aufgenommen zu werden.

7. Getriebe nach Anspruch 6 in Verbindung mit Anspruch 4,
**dadurch gekennzeichnet, dass** die weitere Halterung (28) am anderen axialen Ende des Körpers (12) angeordnet ist.

8. Getriebe nach einem der vorstehenden Ansprüche,
**dadurch gekennzeichnet, dass** die Rinne im Formverfahren einteilig hergestellt ist.

9. Getriebe nach Anspruch 1, **dadurch gekennzeichnet, dass** das Gehäuse (102) mindestens zwei Teile (104, 106) umfasst, die entlang einer zur Gabelachse orthogonalen Verbindungsebene zusammengesetzt sind.

10. Getriebe nach einem der vorstehenden Ansprüche,
**dadurch gekennzeichnet, dass** die Rinne mindestens eine weitere Halterung (28) im Gehäuse (102, 104, 106) umfasst und dass der Haltering (40) einen Ring zum Aufhängen der Schmierrinne (10) an einem axialen Endabschnitt (118) der Gabelwelle (116) bildet und im Zusammenwirken mit der weiteren Halterung (28) eine axiale Positionierung der Schmierrinne (10) im Gehäuse (102) ermöglicht.

## Claims

1. Motor vehicle gearbox, comprising:
- a casing (102, 104, 106);
- at least one gear train (108) rotatably mounted in the casing (102, 104, 106);
- at least one control fork (114) axially translatably connected to a fork shaft (116) arranged in the casing (102, 104, 106) and parallel to the gear train (108);
- and a lubrication chute (10) of the gear train (108), comprising at least one retaining support (26) for the lubrication chute (10) in the casing (102, 104, 106), **characterized in that** the retaining support (26) comprises a retaining ring (40) through which a portion (118) of the shaft (116) of the fork (114) of the gearbox (100) passes axially.

2. Gearbox according to claim 1, **characterized in that** the chute comprises a body (12) which extends in an axial direction, **and in that** the retaining ring (40) extends in a plane orthogonal to the axial direction of the body (12).

3. Gearbox according to claim 2, **characterized in that** the retaining ring (40) extends vertically upward with respect to the body (12).

4. Gearbox according to claim 2, **characterized in that** the retaining ring (40) is arranged at an axial end of the body (12).

5. Gearbox according to any of claims 2 to 4, **characterized in that** the body (12) comprises an oil collection zone (14) and a flow and discharge zone (18) distributing oil by gravity to targeted lubrication points along the gear train (108).

6. Gearbox according to any of the preceding claims, **characterized in that** the chute comprises at least one further retaining support (28) in the casing (102, 104, 106), which support comprises a retaining pin (30) capable of being received axially in a complementary hole (130) in the casing (102, 104, 106).

7. Gearbox according to claim 6 in combination with claim 4, **characterized in that** the further retaining support (28) is arranged at the other axial end of the body (12).

8. Gearbox according to any of the preceding claims, **characterized in that** the chute is produced in a single piece by molding.

9. Gearbox according to claim 1, **characterized in that** the casing (102) comprises at least two parts (104, 106) assembled along a joint plane orthogonal to the fork axis.

10. Gearbox according to any of the preceding claims, **characterized in that** the chute comprises at least one further retaining support (28) in the casing (102, 104, 106), **and in that** the retaining ring (40) constitutes a suspension ring for the lubrication chute (10) on an axial end portion (118) of the fork shaft (116) and, in cooperation with said further retaining support (28), an axial positioning of the lubrication chute (10) inside the casing (102).
